# EUROPEAN PATENT APPLICATION

(11) **EP 4 632 922 A1**
(43) Date of publication of application: **15.10.2025**
(21) Application number: 24854338.1
(22) Date of filing: 24.07.2024
(51) Int. Cl.: H01M 50/383, H01M 50/342, H01M 50/293

(54) **BATTERY MODULE AND BATTERY PACK WITH REINFORCED SAFETY**

(30) Priority: 17.08.2023 KR 20230107851
(71) Applicant: LG Energy Solution, Ltd., Seoul 07335 (KR)
(72) Inventor: CHANG, Hyuk-Kyun, Daejeon 34122 (KR); JUNG, Hye-Mi, Daejeon 34122 (KR)
(74) Representative: Plasseraud IP
(86) International application number: PCT/KR2024/010703
(87) International publication number: WO 2025/037786

(57) **Abstract**

A battery module according to the present disclosure may include a cell assembly having multiple battery cells that are mutually stacked; a module case accommodating the cell assembly in an internal space and having a venting hole formed; and a cover member provided with a plurality of refractory layers each having a discharge slit formed and coupled to an outer surface of the module case so that the venting hole and the plurality of discharge slits communicate with each other, wherein the discharge slit of one of the refractory layers may be ruptured, and the discharge slit of the other neighboring refractory layer may be opened by the rupture of the one of the refractory layers, thereby being configured to be selectively opened only in one direction from the inside of the module case to the outside.

## Description

### TECHNICAL FIELD

The present disclosure relates to a battery module and a battery pack, and more specifically, to a battery module and a battery pack in which discharged substances generated inside a module may be easily discharged through discharge slits having different patterns respectively formed in double refractory layers on the upper portion of the module, and the re-flow thereof into adjacent modules may be blocked, thereby delaying thermal runaway. This application is based on and claims priority from Korean Patent Application No. 10-2023-0107851, filed on August 17, 2023, with the Korean Intellectual Property Office, the disclosure of which is incorporated herein in its entirety by reference.

### BACKGROUND ART

A semi-permanent battery that converts electrical energy into chemical energy and can be repeatedly charged and discharged is called a secondary battery to distinguish it from a primary battery that cannot be reused after being used once.

Secondary batteries include lithium-ion secondary batteries, nickel cadmium (Ni-Cd) batteries, lead-acid batteries, nickel hydrogen (Ni-MH) batteries, air zinc batteries, alkaline manganese batteries, and the like. Among these, lead-acid batteries and lithium-ion secondary batteries are the most actively commercialized secondary batteries.

In particular, lithium-ion secondary batteries have advantages such as high energy storage density, light weight and miniaturization, excellent safety, low discharge rate, and long life, so they have been actively utilized as electric vehicle batteries recently. For reference, lithium-ion secondary batteries are generally classified into cylindrical, prismatic, and pouch types depending on the manufacturing form, and their applications range from electric vehicle batteries to ESS batteries and other electrical devices.

Currently, the operating voltage of a single lithium-ion secondary battery cell is about 2.5 V to 4.5 V. Therefore, in order to apply a secondary battery as an energy source for an electric vehicle, a plurality of lithium-ion battery cells are connected in series and/or in parallel to form a battery module, and the battery modules are connected in series and/or in parallel to form a battery pack.

On the other hand, since the secondary battery involves a chemical reaction during charging and discharging, its performance may be degraded when used in an environment higher than the appropriate temperature, and there is always a possibility of unexpected ignition or explosion when heat control is not performed at the appropriate temperature. Additionally, the battery module has a structure in which these secondary batteries are intensively accommodated inside the module housing, and thus, if any one of the secondary batteries becomes a trigger cell due to heat runaway, it may more easily ignite a chain reaction of secondary cells due to rapid thermal propagation of heat and flames to the surrounding secondary cells.

In particular, as many battery modules as possible should be accommodated in a limited space in terms of density, so that there is not enough empty space inside the battery pack. For example, in a battery pack including one or more battery modules, the space between the module case and the pack case may be formed to be narrow.

Therefore, it is necessary to delay or suppress heat propagation by preventing the discharged venting gas from re-flowing into other modules along with quickly discharging the venting gas even in such a narrow space.

### DISCLOSURE

### Technical Problem

The present disclosure is designed to solve the problems of the related art, and therefore the present disclosure is directed to providing a battery module in which discharged substances such as high-temperature particles and venting gases generated from any one battery module due to a thermal event may be quickly discharged out of the battery module, and the re-flow of the discharged substances into other adjacent battery modules may be minimized.

The present disclosure is also directed to providing a battery pack with enhanced safety by including such a battery module.

Technical problems to be solved by the present disclosure are not limited to the above-described problems, and other problems not mentioned herein may be clearly understood by those skilled in the art from the following description of the present disclosure.

### Technical Solution

A battery module according to the present disclosure for solving the above problem may include a cell assembly having multiple battery cells that are mutually stacked; a module case accommodating the cell assembly in an internal space and having a venting hole formed; and a cover member provided with a plurality of refractory layers each having a discharge slit formed and coupled to an outer surface of the module case so that the venting hole and the plurality of discharge slits communicate with each other, wherein the discharge slit of one of the refractory layers may be ruptured, and the discharge slit of the other neighboring refractory layer may be opened by the rupture of the one of the refractory layers, thereby being configured to be selectively opened only in one direction from the inside of the module case to the outside.

The plurality of refractory layers may be two layers, and the refractory layers may include a first refractory layer provided with a first discharge slit formed in the width direction of the module case or formed corresponding to the shape of the venting hole; and a second refractory layer provided with a second discharge slit formed in the length direction of the module case.

The second refractory layer may be provided to be overlapped on the first refractory layer.

The first refractory layer may be provided to cover the upper surface of the module case, or to cover the upper surface of the module case and both side surfaces in the length direction of the module case.

The second refractory layer may be provided to cover the upper surface of the module case and both side surfaces in the length direction of the module case.

The first discharge slit and the second discharge slit may be provided to overlap each other in the vertical direction on the venting hole, and an imaginary boundary circle connecting the ends of the first discharge slit formed in the width direction and an imaginary ellipse connecting the ends of the second discharge slit may be provided to overlap the opening shape of the venting hole.

The first discharge slit may be formed with a partially cut rupture line, and the rupture line may be ruptured and opened by gaseous discharged substances or solid discharged substances generated in any one of the module cases where a thermal event occurs, and the second discharge slit may be formed with at least one cut portion that is continuously cut, and the cut portion may be opened by the rupture of the first discharge slit.

The second discharge slit of another module case adjacent to any one of the module cases where a thermal event occurs may be configured to block the re-inflow of the gaseous discharged substances or solid discharged substances, and the first discharge slit adjacent to the second discharge slit may support the second discharge slit to limit the deformation in the thickness direction of the second discharge slit.

The rupture line may be formed to extend in the width direction of the module case, and may be disposed to be spaced apart at predetermined intervals along the length direction of the module case.

The rupture line may be formed on the edge of a rupture membrane corresponding to the opening shape of the venting hole and may be provided with a bridge portion connecting the first refractory layer and the rupture membrane at regular length intervals.

The cut portion may be a cut line formed parallel to the length direction of the module case.

The cut portion may be in plurality, and the cut portions may include a first cut line formed parallel to the length direction of the module case; and a second cut line each formed diagonally at both ends of the first cut line.

The cut portions may include a first cut line formed parallel to the length direction of the module case; and a second cut line each formed diagonally at both ends of the first cut line, wherein the orthogonal projection of the second cut line onto the venting hole may not overlap with the orthogonal projection of the bridge portion onto the venting hole.

The cover member may be made of an inorganic material, a MICA material, a refractory plastic, or a combination thereof.

The first refractory layer may be made of an inorganic material or a MICA material, and the second refractory layer may be made of an inorganic material, a MICA material, or a refractory plastic.

Additionally, according to the present disclosure, a battery pack including one or more of the above-described battery modules may be provided.

### Advantageous Effects

According to one aspect of the present disclosure, discharged substances such as high-temperature particles and venting gases generated from any one battery module due to a thermal event may be quickly discharged out of the battery module through discharge slits having different patterns respectively formed in the double refractory layers on the upper portion of the module. As a result, the possibility of deterioration or explosion of the battery module may be significantly reduced.

Additionally, according to one aspect of the present disclosure, the discharged substances discharged to the outside of the battery module may be blocked by the double refractory layers of the adjacent battery module, thereby minimizing re-inflow. As a result, the heat propagation in which a thermal runaway phenomenon generated from any one trigger cell spreads to the surrounding secondary batteries may be delayed.

In this way, according to the present disclosure, the high-temperature particles and venting gases in the trigger module including the trigger cell may be smoothly discharged, thereby reducing heat accumulation inside the battery module, and externally discharged particles and flames may be prevented from flowing into other adjacent battery modules, thereby delaying heat propagation between the battery modules, resulting in enhancing the safety of the battery module.

Additionally, the safety of the battery pack of the present disclosure is enhanced by including such a battery module.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a schematic perspective view of a battery module according to an embodiment of the present disclosure.
FIG. 2 is an exploded perspective view of the major configurations of the battery module of FIG. 1.
FIG. 3 is a perspective view of a first refractory layer in a cover member of a battery module according to an embodiment of the present disclosure.
FIG. 4 is a view showing a modified example of the first refractory layer of FIG. 3.
FIG. 5 is a perspective view of a second refractory layer in a cover member of a battery module according to an embodiment of the present disclosure.
FIG. 6 is a top view in a state where a cover member is coupled to a module case in a battery module according to an embodiment of the present disclosure.
FIG. 7 is a cross-sectional view taken along line A-A' of FIG. 6.
FIG. 8 is a view schematically showing a cross-sectional view of the structure of a battery pack including a battery module according to an embodiment of the present disclosure.
FIGS. 9 and 10 are top views of a first refractory layer and a second refractory layer in a cover member of a battery module according to another embodiment of the present disclosure.
FIG. 11 is a top view in a state where a cover member is coupled to a module case in a battery module according to another embodiment of the present disclosure.
FIG. 12 is a view for describing a battery pack and a vehicle according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

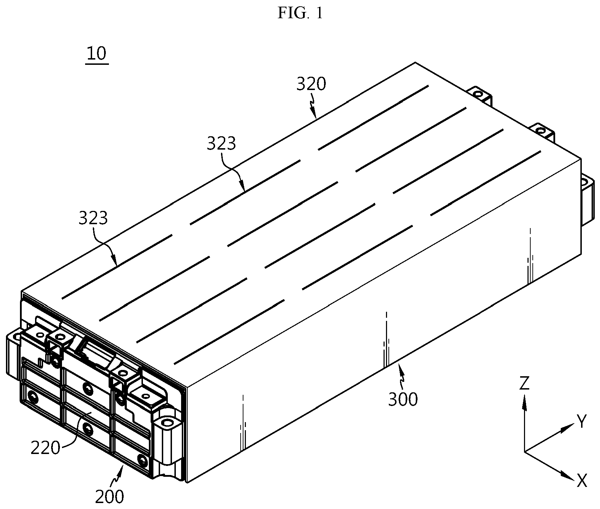

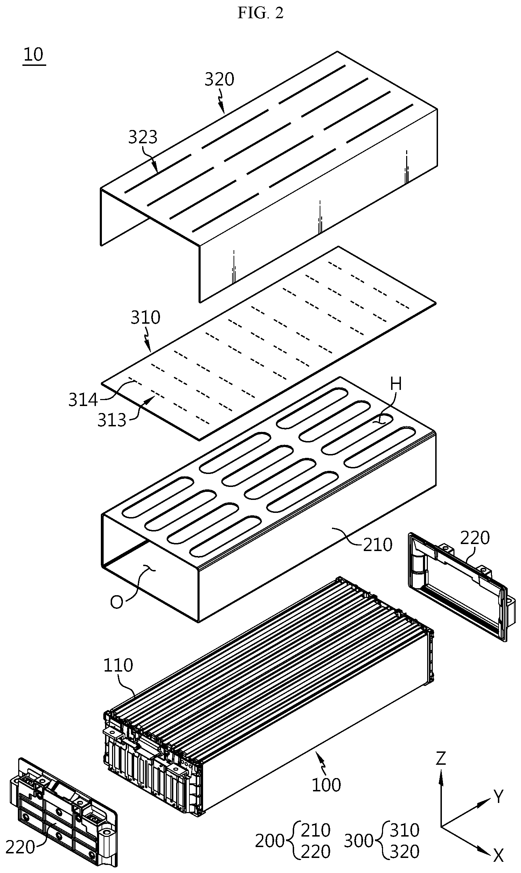

FIG. 1 is a schematic perspective view of a battery module according to an embodiment of the present disclosure, and FIG. 2 is an exploded perspective view of the major configurations of the battery module of FIG. 1.

Referring to FIGS. 1 and 2, the battery module 10 according to the present disclosure includes a cell assembly 100, a module case 200, and a cover member 300.

The cell assembly 100 may include one or more battery cells 110. Here, each battery cell 110 may mean a secondary battery. The battery cell 110 means a secondary battery including an electrode assembly, an electrolyte, and a pouch case accommodating the electrode assembly, and in this embodiment, a pouch-type battery cell 110 having a high energy density and easy stacking is contemplated, but it is obvious that a cylindrical or prismatic secondary battery may be applied as the battery cell 110.

The pouch-type battery cell 110 includes an electrode assembly, a case accommodating the electrode assembly, and a pair of electrode leads that are connected to the electrode assembly and are drawn out of the case to function as electrode terminals. The pair of electrode leads may be drawn out forward and backward (±Y direction) along the length direction of the battery cell 110. Alternatively, if necessary, the electrode leads 112 may have a form in which they are located only at one end in the Y-axis direction, for example, at the end in the -Y-axis direction. Adjacent to the pair of electrode leads of the battery cell 110, electrical components such as a busbar, a busbar frame, and a module connector, although not shown, may be mounted.

These battery cells 110 may be stacked and arranged in at least one direction. In this embodiment, referring mainly to FIG. 2, the battery cells 110 may be stacked in a form arranged along the horizontal direction (the width direction of the battery module 10, X-axis direction) while standing upright in the vertical direction (Z-axis direction), respectively.

The cell assembly 100 is an assembly of battery cells 110 formed by stacking a plurality of battery cells 110. That is, the cell assembly 100 may be an assembly of a plurality of pouch-type battery cells 110 in which the wide surface of the battery cells 110 is upright and stacked in one direction (X-axis direction), as shown in FIG. 2.

The module case 200 may be configured to have an internal space formed and accommodate the battery cells 110 in the internal space. The module case 200 is a component for protecting the cell assembly 100 from external impacts or the like and may be preferably made of a material having excellent mechanical rigidity. The module case 200 of this embodiment may include a case body 210 and end plates 220 disposed on the front and rear surfaces of the case body 210.

The case body 210 may be configured in a rectangular tubular form having an open end O at both ends in the length direction (Y-axis direction) and a hollow structure with an empty interior. For example, the case body 210 may be configured in a tubular form having an upper surface, a lower surface, a left surface, and a right surface, and having openings formed at the front and rear ends, respectively.

In addition, the module case 200 may be formed in various other forms. For example, the case body 210 may be configured in a form where a left plate, a right plate, and a bottom plate are integrated with each other. In this case, the integrated case portion may be referred to as a U-frame. The U-frame may be configured in a tubular form by welding a top plate to the upper surface. Alternatively, the module case 200 may include a box-shaped lower case in which a left plate, a right plate, a front plate, and a rear plate are integrated, and an upper cover that closes the upper open end of the lower case.

The case body 210 may be provided to allow the cell assembly 100 to be inserted therein along the length direction. That is, the case body 210 may be configured to allow the battery cells 110 stacked in multiple layers to be inserted therein in a slide or forced fit manner. For the forced fit, it may be configured such that there is almost no gap between the upper surface and lower surface of the case body 210 and the upper end and lower end of the battery cells 110, and almost no gap between both side surfaces of the case body 210 and both sides of the battery cells 110. This case body 210 may be made of a metal material having rigidity and heat resistance to physically or chemically protect the accommodated battery cells 110.

The end plates 220 are disposed at both ends in the length direction of the cell assembly 100 where the electrode leads of the battery cells 110 are located, that is, at the front and rear, and may be provided to be coupled to the open end O of the case body 210. The end plates 220 may be provided to cover the busbar frame, the electrode leads, the connection part, and the like, in a state where the electrode leads of the battery cells 110 are fixedly connected to the busbar frame, so as not to be exposed to the outside. The end plate 220 is configured, for example, to be made of an insulating material on the inside and a metal material on the outside, and may be configured to be fixedly coupled to the case body 210 by welding. Meanwhile, although not shown for convenience of the drawing, the end plate 220 may have holes or slits partially for exposing components that need to be exposed to the outside, such as a positive electrode terminal and a negative electrode terminal or a connector of the battery module 10.

The module case 200 having such a configuration may have a venting hole H formed on at least one side. When discharged substances such as a venting gas or the like are generated and discharged from the cell assembly 100 accommodated in the internal space, the venting hole H may be configured to allow the discharged substances to be discharged to the outside from the internal space of the module case 200. For example, the module case 200 may be configured in a sealed form except for the venting hole H. And, the venting hole H may be formed in a completely open form so as to penetrate the module case 200 in an inward and outward direction.

In this embodiment, the venting hole H may be provided in the form of a kind of a long hole having a predetermined width in the width direction of the module case 200 and elongated in the length direction of the module case 200. And, as indicated by H in FIG. 2, the venting hole H may be formed in plurality on the upper side of the module case 200. Meanwhile, the number and shape of the venting holes H may be various, and the position at which the venting holes H are disposed may be variously changed if necessary.

The cover member 300 may be disposed on the outer surface of the module case 200. Referring mainly to FIG. 2, the cover member 300 may be provided on the upper side of the module case 200. Accordingly, the cover member 300 may be configured to cover the venting hole H formed in the upper surface of the module case 200. Additionally, one configuration of the cover member 300 may be provided to cover both sides in the width direction (X-axis direction) of the module case 200 (or both sides in the length direction (Y-axis direction)).

This cover member 300 may include a refractory layer. Here, the refractory layer may be made of a material securing fire resistance or heat resistance. Preferably, the refractory layer may have a grade of V-O or higher in the UL 94 test. The refractory layer may be made of an inorganic material (e.g., a fire retardant barrier (FRB) material, etc.), a MICA material, a fire resistant plastic, or a combination thereof. Accordingly, heat resistance against high-temperature discharged substances such as venting gases, flames, sparks, and the like generated when a thermal event occurs is secured, so that it may withstand high-temperature heat without melting, and heat propagation to adjacent modules may be suppressed. On the other hand, it is obvious that the material of the refractory layer may be applied without significant restrictions on the type of material as long as it secures fire resistance or heat resistance, in addition to the materials described above.

The cover member 300 in this embodiment may be composed of a plurality of refractory layers. Specifically, the plurality of refractory layers may be composed of two layers, and the refractory layers may include a first refractory layer 310 provided with a first discharge slit 313 and a second refractory layer 320 provided with a second discharge slit 323, as will be described in detail later.

The first refractory layer 310 and the second refractory layer 320 may be provided with a first discharge slit 313 and a second discharge slit 323, respectively. The first discharge slit 313 and the second discharge slit 323 may be provided to overlap each other in the vertical direction on the venting hole H. And, the first discharge slit 313 and the second discharge slit 323 may be provided to communicate with the venting hole H. Accordingly, the discharged substances generated within the module case 200 due to the thermal event may pass through the first discharge slit 313 of the first refractory layer 310 through the vent hole H, and then pass through the second discharge slit 323 of the second refractory layer 320 to be discharged to the outside of the battery module 10.

The first discharge slit 313 and the second discharge slit 323 are processed into different shapes.

And, the discharge slit of one of the refractory layers (in this embodiment, the first discharge slit 313 of the first refractory layer 310) is configured to be ruptured, and the discharge slit of the other neighboring refractory layer (in this embodiment, the second discharge slit 323 of the second refractory layer 320) is configured to be opened by the rupture of the one of the refractory layers (in this embodiment, the first refractory layer 310), thereby being configured to be selectively opened only in one direction from the inside of the module case 200 to the outside.

To explain this in more detail, the discharged substances generated by the thermal event are formed at high temperature and high pressure, and when the pressure is higher than a predetermined pressure, the first discharge slit 313 adjacent to the venting hole H may be ruptured and opened. And, the second discharge slit 323 may be opened by the rupture of the first refractory layer 310. Accordingly, the discharged substances inside the battery module 10 may be discharged in one direction from the inside of the module case 200 to the outside. Accordingly, the discharged substances such as high-temperature particles and venting gases generated from any one battery module 10 may be quickly discharged to the outside of the battery module 10. Therefore, the high-temperature particles and venting gases from the trigger cell may be smoothly discharged, thereby reducing heat accumulation inside the battery module 10. As a result, the possibility of deterioration or explosion of the battery module 10 may be reduced.

On the other hand, since the vented discharged substances are in a state where the temperature or pressure is relatively lowered, the reverse re-inflow of the discharged substances into the module case 200 through the cover member 300 on other adjacent battery modules 10 may be blocked. From the perspective of particles and flames outside other battery modules 10, the second refractory layer 320 primarily blocks them, and the first refractory layer 310 secondarily supports it, so that particles and flames discharged from the trigger module including the trigger cell may be prevented from re-flowing into other adjacent battery modules 10.

Accordingly, the cover member 300 in this embodiment may be selectively opened only in one direction from the inside of the module case 200 to the outside. Accordingly, the heat propagation in which a thermal runaway phenomenon generated from any one trigger cell or triggered battery module 10 spreads in series to the surrounding secondary batteries may be delayed, and the battery module 10 including such a cover member 300 is a battery module with enhanced safety.

Additionally, in the case of the conventional single cover member, a discharge hole was provided through slitting processing, but there was an aspect that the slitting processability was not precise and discharge uniformity was not secured due to processing deviation and material deviation. On the other hand, according to this embodiment, the double refractory layers 310, 320 and the respective discharge slits 313, 323 to each refractory layer 310, 320 are applied in duplicate, so that there is an advantage that processing deviation and material deviation may be reduced.

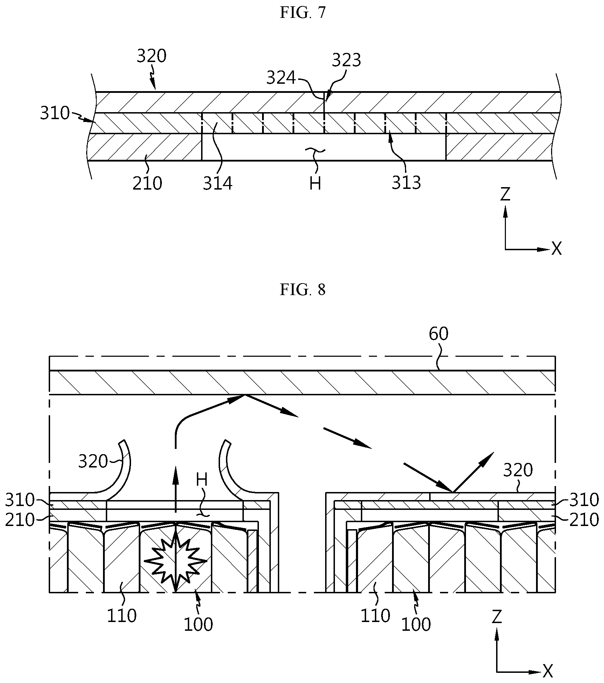

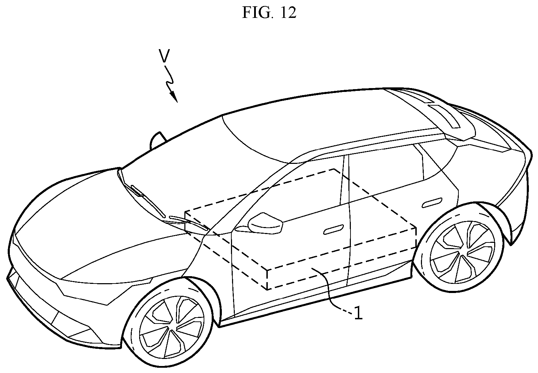

The battery module 10 may be accommodated in a pack case and configured as a battery pack (reference numeral 1 in FIG. 12). In this case, the pack case may include a lower case in which the battery module 10 is seated and the upper surface thereof is open, and a pack cover (reference numeral 60 in FIG. 8) coupled to the open upper surface of the lower case. The lower case may include multiple partition walls, and the battery modules 10 accommodated in the pack case may be separated by the partition walls. Since this battery pack includes battery modules 10 with enhanced safety, the safety of the battery pack may also be enhanced.

Hereinafter, the cover member 300 will be described in detail.

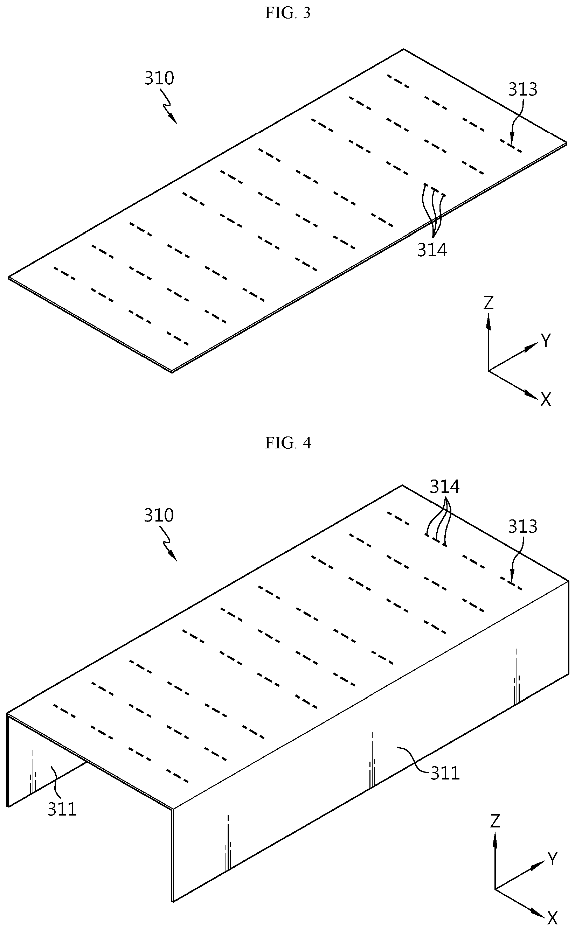

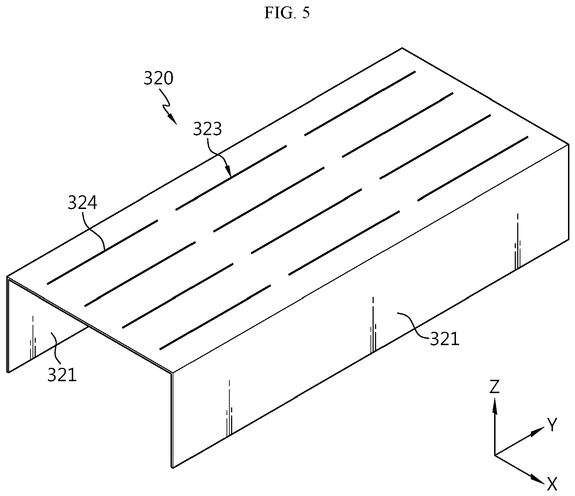

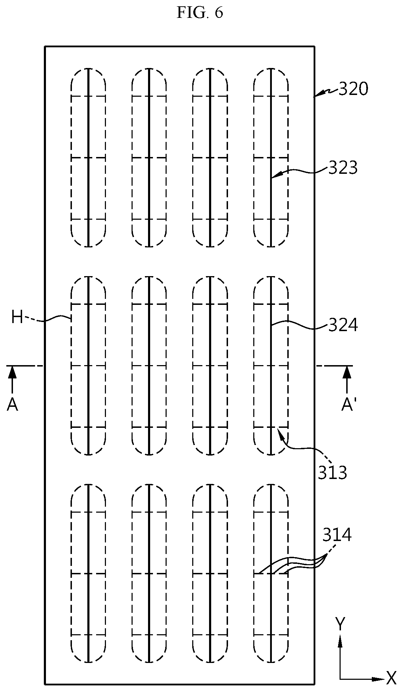

FIG. 3 is a perspective view of a first refractory layer in a cover member of a battery module according to an embodiment of the present disclosure, FIG. 4 is a view showing a modified example of the first refractory layer of FIG. 3, FIG. 5 is a perspective view of a second refractory layer in a cover member of a battery module according to an embodiment of the present disclosure, and FIG. 6 is a top view in a state where a cover member is coupled to a module case in a battery module according to an embodiment of the present disclosure.

Referring to FIGS. 3 to 6 and the preceding FIGS. 1 and 2, the cover member 300 includes two layers of refractory layer. The refractory layers may include a first refractory layer 310 in which a first discharge slit 313 is formed, and a second refractory layer 320 in which a second discharge slit 323 is formed.

Referring to FIG. 2 again, the first refractory layer 310 may be disposed directly above the module case 200. As shown in FIG. 3, the first refractory layer 310 may be provided in a flat type to cover the upper surface of the module case 200. The first refractory layer 310 may be disposed to be in contact with the upper surface of the module case 200 to cover the venting hole H.

As a modified example, referring mainly to FIG. 4, the first refractory layer 310 may be provided to cover the upper surface of the module case 200 and both side surfaces in the length direction of the module case 200. The first refractory layer 310 may be provided with side plates 311. In this case, the side plates 311 may cover both side surfaces of the module case 200 to block discharge of the discharged substances in the width direction of the module case 200 and to efficiently block heat propagation from the battery module 10 disposed adjacently in the width direction.

In addition, if a battery module including the first refractory layer 310 is integrated into a pack case including multiple partition walls (not shown) to form a battery pack, the heat resistance and durability of the entire pack case may be improved by minimizing thermal energy dissipation to the partition walls within the pack case.

The first refractory layer 310 may be provided with a first discharge slit 313 formed in the width direction of the module case 200. The first discharge slit 313 may be formed in the width direction (X-axis direction) of the module case 200 and may be provided in plurality to be spaced apart at predetermined intervals along the length direction (Y-axis direction). And, the first discharge slit 313 may be disposed within the orthogonal projection area of the vent hole H in the vertical direction (Z-axis direction).

The first discharge slit 313 may be formed with a rupture line 314. The rupture line 314 refers to a kind of cut line that is provided to be partially cut, and may be provided to be cut at regular intervals. Accordingly, the rupture line 314 may be torn and opened in the event of a predetermined pressure or higher.

The first refractory layer 310 may be made of a refractory material, and may also be made of an inorganic material or a MICA material laminated with a silicon pad. Since the plate surface of this first refractory layer 310 has fire resistance, the first refractory layer 310 does not melt from heat such as venting gas or flames generated from adjacent modules and may serve to protect the corresponding battery module 10.

The second refractory layer 320 may be provided on the first refractory layer 310. The second refractory layer 320 may be coupled to face the upper surface of the first refractory layer 310. The second refractory layer 320, like the first refractory layer 310, may also be made of a refractory material, and is preferably made of an inorganic material, a MICA material, or a refractory plastic. The second refractory layer 320 may also be made of an inorganic material or a MICA material laminated with a silicon pad. Here, the refractory plastic may be a plastic material such as polystyrene, polyurethane, or the like including a refractory enhancer such as silicate, aluminum salt, titanium salt, or the like.

Referring mainly to FIG. 5, the second refractory layer 320 is provided to cover the upper surface of the module case 200, and side plates 321 may be provided to cover both side surfaces in the length direction (Y-axis) of the module case 200. The second refractory layer 320 may protect the upper surface and side surfaces of the module case 200 from external heat. In particular, when the modified example of the first refractory layer 310 is applied, both side surfaces in the length direction of the module case 200 may be formed with a double refractory layer (two side plates 311, 321) to further improve heat resistance.

The second refractory layer 320 may be provided with a second discharge slit 323. The second discharge slit 323 may be formed in the length direction of the module case 200 and may be provided to vertically intersect with the first discharge slit 313 when viewed from above. The second discharge slit 323 may be formed with at least one cut portion that is continuously cut. The cut portion may be a cut line 324 formed parallel to the length direction of the module case 200. And, the cut line 324 may be a cutting line that is continuously cut. The cut line 324 may be disposed within the orthogonal projection area of the venting hole H in the vertical direction.

Referring mainly to FIG. 6, the first discharge slit 313 of the first refractory layer 310 and the second discharge slit 323 of the second refractory layer 320 may be disposed to overlap in the vertical direction on the venting hole H. Specifically, the rupture line 314 of the first discharge slit 313 may be formed in the width direction of the battery module 10, and may be formed corresponding to the opening shape of the venting hole H. Additionally, the cut line 324 of the second discharge slit 323 may be formed in the length direction of the battery module 10, and may be formed up to a point that matches the opening shape of the venting hole H in the length direction (Y-axis direction).

In other words, an imaginary boundary circle connecting the ends of the first discharge slit 313 formed in the width direction and an imaginary ellipse connecting the ends of the second discharge slit 323 may be provided to overlap the opening shape of the venting hole H. Accordingly, the venting hole H, the first discharge slit 313, and the second discharge slit 323 may communicate with one another in the vertical direction, which will be described later.

Hereinafter, an operating mechanism of the cover member 300 will be described.

FIG. 7 is a cross-sectional view taken along line A-A' of FIG. 6, and FIG. 8 is a view schematically showing a cross-sectional view of the structure of a battery pack including a battery module according to an embodiment of the present disclosure.

Referring to FIGS. 6 and 7, the discharged substances generated inside the module case 200 may be discharged to the outside (for example, inside the pack outside the module) through the first discharge slit 313 and the second discharge slit 323 that communicate with the venting hole H in the vertical direction, if necessary.

Specifically, when a thermal event occurs due to ignition in a trigger cell or the like, the discharged substances are discharged through the venting hole H of the corresponding triggered battery module 10.

In this case, when a predetermined temperature and pressure are applied due to the high temperature and high pressure of the discharged substances, the rupture line 314 of the first discharge slit 313 is partially or completely ruptured and opened.

Next, the ruptured first refractory layer 310 faces the outside of the module case 200, and the second discharge slit 323 that has already been cut is naturally opened. Here, the second discharge slit 323 may be naturally opened due to the formation of the cut line 324 that is continuously cut, and provides no resistance to the discharged substances.

In addition, when the first discharge slit 313 and the second discharge slit 323 are opened, they may be opened substantially in the same shape as the opening of the venting hole H, thereby minimizing the discharge resistance.

According to one aspect of the present disclosure, discharged substances such as high-temperature particles and venting gases generated in the trigger module may be quickly discharged out of the battery module 10. As a result, the possibility of deterioration or explosion of the battery module 10 may be significantly reduced.

Referring to FIG. 8, when an event occurs in any one of the battery modules included in the battery pack, the discharged substances from the battery cell 110 are discharged while opening the first discharge slit 313 through the venting hole H (see an arrow in the Z-axis direction on the left side of the drawing), and hit the pack cover 60 and then flow back. At this time, it may be configured to block the re-flow of the discharged substances into the adjacent battery module 10 (see the arrow mark bouncing from the second refractory layer 320 on the right side of the drawing). That is, the second discharge slit 323 of another module case 200 adjacent to any one module case 200 where a thermal event occurs may be configured to block the re-inflow of the gaseous discharged substances or the solid discharged substances. This is because the discharged substances already discharged out of the battery module 10, particularly the venting gas, may be in a relatively lowered pressure state, and the high temperature state of the flames or the solid discharged substances may also be in a relatively lowered state. Such discharged substances are primarily blocked by the second refractory layer 320. The second discharge slit 323 may block the re-flow of the discharged substances into the module.

Additionally, the first refractory layer 310 secondarily blocks the re-inflow of the discharged substances. That is, the first discharge slit 313 positioned to face the lower portion of the second discharge slit 323 may support the second discharge slit 323. In particular, there is a possibility of deformation in the thickness direction of the second discharge slit 323 due to the pressure of the discharged substances, but the first discharge slit 313 may firmly support it from below. By this configuration, the re-inflow of the gaseous discharged substances or the solid discharged substances may be blocked. In this case, the rupture line 314 of the first discharge slit 313 may be provided to withstand the pressure of the discharged substances during the re-inflow process.

In this way, according to this embodiment, the discharged substances discharged to the outside of the battery module 10 may be blocked by the double refractory layers 310, 320 of the adjacent battery module 10, thereby minimizing the re-inflow. As a result, the heat propagation in which a thermal runaway phenomenon generated from any one trigger cell or triggered battery module 10 spreads in series to the surrounding secondary batteries may be delayed. Therefore, in a battery pack including such a battery module 10, the heat propagation between the battery modules 10 may be delayed, thereby enhancing safety.

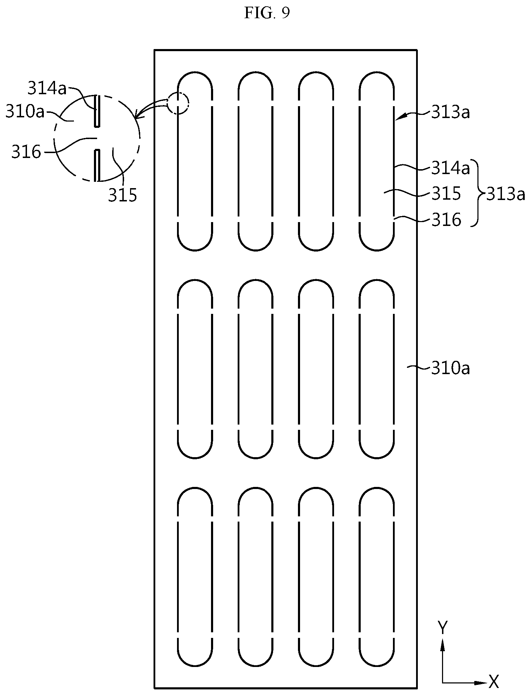

Hereinafter, other embodiments of the battery module 10 of the present disclosure will be briefly described with reference to FIGS. 9 to 11.

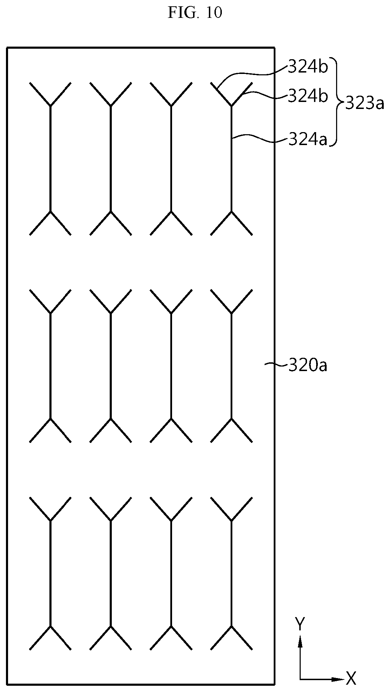

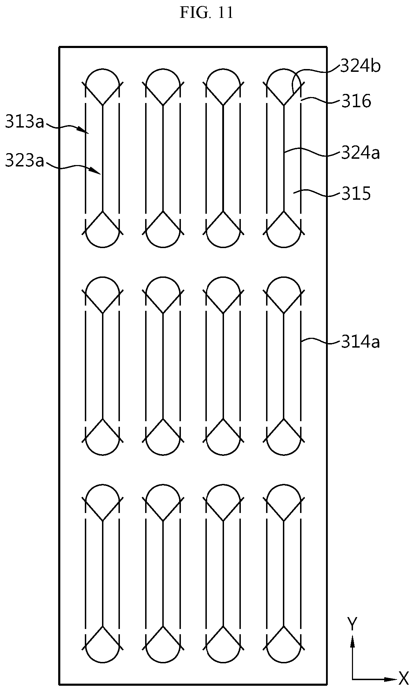

FIGS. 9 and 10 are top views of a first refractory layer and a second refractory layer in a cover member of a battery module according to another embodiment of the present disclosure, and FIG. 11 is a top view in a state where a cover member is coupled to a module case in a battery module according to another embodiment of the present disclosure.

The same reference numerals as in the previous drawings refer to the same members, and duplicate descriptions of the same members will be omitted, and differences from the above-described embodiment will be mainly described.

Referring to FIGS. 9 to 11, the cover member 300 may include a first refractory layer 310a provided with a first discharge slit 313a formed corresponding to the shape of the venting hole H, and a second refractory layer 320a provided with a second discharge slit 323a formed in the length direction of the module case 200.

Referring mainly to FIG. 9, the first discharge slit 313a is formed with a partially cut rupture line 314a, and the rupture line 314a may be formed on the edge of a rupture membrane 315 corresponding to the opening shape of the venting hole H and may be provided with a bridge portion 316 connecting the first refractory layer 310a and the rupture membrane 315 at regular length intervals. The bridge portion 316 supports the rupture membrane 315.

Referring mainly to FIG. 10, the second discharge slit 323a is formed with a cut portion that is continuously cut, and the cut portion may be in plurality and the cut portions may include a first cut line 324a formed parallel to the length direction of the module case 200; and a second cut line 324b each formed diagonally at both ends of the first cut line 324a. The second cut line 324b may be formed at the upper and lower ends of the first cut line 324a in the Y-axis direction, respectively.

Referring mainly to FIG. 11, the orthogonal projection of the second cut line 324b onto the venting hole H may not overlap with the orthogonal projection of the bridge portion 316 onto the venting hole H.

The first discharge slit 313a of the first refractory layer 310a may discharge the discharged substances more quickly. In particular, the bridge portion 316 is ruptured by the discharged substances, and the rupture membrane 315 having the size of the opening area of the venting hole H is opened, so that the discharged substances therein may be discharged quickly.

In addition, since the second cut line 324b is provided larger than the opening of the venting hole H, the size in which the second discharge slit 323a is opened to open the rupture membrane 315 to the outside may be larger, thereby improving discharge efficiency.

Additionally, the orthogonal projection of the second cut line 324b onto the venting hole H may not overlap with the orthogonal projection of the bridge portion 316 onto the venting hole H, so that the bridge portion 316 may be placed in a position misaligned with the second cut line 324b. Accordingly, the bridge portion 316 may be supported under the weak second cut line 324b that is likely to be naturally cut and opened, thereby securing the robustness of the cover member 300 in the corresponding area, resulting in more reliably preventing the re-inflow of discharged substances from the outside.

According to this embodiment, discharged substances such as high-temperature particles and venting gases generated from any one battery module 10 due to a thermal event may be quickly discharged out of the battery module 10 through discharge slits having different patterns respectively formed in the double refractory layers on the upper portion of the battery module. As a result, the possibility of deterioration or explosion of the battery module 10 may be significantly reduced.

Additionally, the discharged substances discharged to the outside of the battery module 10 may be blocked by the double refractory layers 310a, 320a of the adjacent battery module 10, thereby minimizing re-inflow. As a result, the heat propagation in which a thermal runaway phenomenon generated from any one trigger cell or triggered battery module 10 spreads in series to the surrounding secondary batteries may be delayed.

FIG. 12 is a view for describing a battery pack according to an embodiment of the present disclosure and a vehicle including the same.

The battery pack 1 according to the present disclosure may include one or more battery modules 10 according to the present disclosure described above. In particular, in order to increase capacity and/or output power, the battery pack 1 according to the present disclosure may include multiple battery modules 10 according to the present disclosure. In this case, various configurations described above may be applied to each battery module 10. For example, each battery module 10 may include a cell assembly 100, a module case 200, and a cover member 300. And, these multiple battery modules 10 may be accommodated inside a pack case as described above. Moreover, in the case of the battery module 10 according to an embodiment of the present disclosure, even if another battery module 10 is located on the front or rear side, heat transfer between modules may be effectively prevented.

The battery pack 1 according to the present disclosure may further include various other components, in addition to the battery module 10 or the pack case, for example, components of a battery pack known at the time of application of the present disclosure, such as a battery management system (BMS), a busbar, a relay, a current sensor, a fuse, or the like, in the internal space of the pack case.

The battery module 10 according to the present disclosure or the battery pack 1 according to the present disclosure may be applied to a vehicle V such as an electric vehicle or a hybrid vehicle. That is, the vehicle V according to the present disclosure may include the battery module 10 according to the present disclosure or the battery pack 1 according to the present disclosure. Additionally, the vehicle V according to the present disclosure may further include various other components included in the vehicle V, in addition to the battery module 10 or the battery pack 1. For example, the vehicle V according to the present disclosure may further include a vehicle body, a motor, a control device such as an electronic control unit (ECU), or the like, in addition to the battery module 10 according to the present disclosure.

Additionally, the battery module 10 according to the present disclosure or the battery pack 1 according to the present disclosure may be applied to an energy storage system (ESS). That is, the energy storage system according to the present disclosure may include the battery module 10 according to the present disclosure or the battery pack 1 according to the present disclosure.

The present disclosure has been hereinabove described with regard to a limited number of embodiments and drawings, but the present disclosure is not limited thereto and various modifications and variations will be possible by those having ordinary skill in the technical field pertaining to the present disclosure within the technical aspect of the present disclosure and the scope of the appended claims and their equivalents.

Meanwhile, the terms indicating directions as used herein such as upper, lower, left, right, front, and rear are used for convenience of description only, and it is obvious to those skilled in the art that the terms may change depending on the position of the stated element or an observer.

### [Explanation of Reference Signs]

| | | | |
|---|---|---|---|
| 1: | battery pack | V: | vehicle |
| 10: | battery module | 100: | cell assembly |
| 110: | battery cell | 200: | module case |
| 210: | case body | H: | venting hole |
| 220: | end plate | 300: | cover member |
| 310, 310a: | first refractory layer | 313, 313a: | first discharge slit |
| 314, 314a: | rupture line | 315: | rupture membrane |
| 316: | bridge portion | 320, 320a: | second refractory layer |
| 311, 321: | side plate | 323, 323a: | second discharge slit |
| 324: | cut line | 324a: | first cut line |
| 324b: | second cut line | | |

## Claims

1. A battery module, comprising:
a cell assembly having multiple battery cells that are mutually stacked;
a module case accommodating the cell assembly in an internal space and having a venting hole formed; and
a cover member provided with a plurality of refractory layers each having a discharge slit formed and coupled to an outer surface of the module case so that the venting hole and the plurality of discharge slits communicate with each other,
wherein the discharge slit of one of the refractory layers is ruptured, and the discharge slit of the other neighboring refractory layer is opened by the rupture of the one of the refractory layers, thereby being configured to be selectively opened only in one direction from the inside of the module case to the outside.

2. The battery module according to claim 1,
wherein the plurality of refractory layers are two layers, and
the refractory layers comprise:
a first refractory layer provided with a first discharge slit formed in the width direction of the module case or formed corresponding to the shape of the venting hole; and
a second refractory layer provided with a second discharge slit formed in the length direction of the module case.

3. The battery module according to claim 2,
wherein the second refractory layer is provided to be overlapped on the first refractory layer.

4. The battery module according to claim 3,
wherein the first refractory layer is provided to cover the upper surface of the module case, or to cover the upper surface of the module case and both side surfaces in the length direction of the module case.

5. The battery module according to claim 3,
wherein the second refractory layer is provided to cover the upper surface of the module case and both side surfaces in the length direction of the module case.

6. The battery module according to claim 3,
wherein the first discharge slit and the second discharge slit are provided to overlap each other in the vertical direction on the venting hole, and
an imaginary boundary circle connecting the ends of the first discharge slit formed in the width direction and an imaginary ellipse connecting the ends of the second discharge slit are provided to overlap the opening shape of the venting hole.

7. The battery module according to claim 3,
wherein the first discharge slit is formed with a partially cut rupture line, and the rupture line is ruptured and opened by gaseous discharged substances or solid discharged substances generated in any one of the module cases where a thermal event occurs, and
the second discharge slit is formed with at least one cut portion that is continuously cut, and the cut portion is opened by the rupture of the first discharge slit.

8. The battery module according to claim 7,
wherein the second discharge slit of another module case adjacent to any one of the module cases where a thermal event occurs is configured to block the re-inflow of the gaseous discharged substances or solid discharged substances, and
the first discharge slit adjacent to the second discharge slit supports the second discharge slit to limit the deformation in the thickness direction of the second discharge slit.

9. The battery module according to claim 7,
wherein the rupture line is formed to extend in the width direction of the module case, and is disposed to be spaced apart at predetermined intervals along the length direction of the module case.

10. The battery module according to claim 7,
wherein the rupture line is formed on the edge of a rupture membrane corresponding to the opening shape of the venting hole and is provided with a bridge portion connecting the first refractory layer and the rupture membrane at regular length intervals.

11. The battery module according to claim 7,
wherein the cut portion is a cut line formed parallel to the length direction of the module case.

12. The battery module according to claim 11,
wherein the cut portion is in plurality, and
the cut portions comprise:
a first cut line formed parallel to the length direction of the module case; and
a second cut line each formed diagonally at both ends of the first cut line.

13. The battery module according to claim 10,
wherein the cut portions comprise:
a first cut line formed parallel to the length direction of the module case; and
a second cut line each formed diagonally at both ends of the first cut line,
wherein the orthogonal projection of the second cut line onto the venting hole does not overlap with the orthogonal projection of the bridge portion onto the venting hole.

14. The battery module according to claim 1,
wherein the cover member is made of an inorganic material, a MICA material, a refractory plastic, or a combination thereof.

15. The battery module according to claim 2,
wherein the first refractory layer is made of an inorganic material or a MICA material, and
the second refractory layer is made of an inorganic material, a MICA material, or a refractory plastic.

16. A battery pack comprising a battery module according to any one of claims 1 to 15.
